# EUROPÄISCHE PATENTSCHRIFT

(11) **EP 3 178 592 B1**
(45) Veröffentlichungstag und Bekanntmachung des Hinweises auf die Patenterteilung: **29.08.2018**
(21) Anmeldenummer: 15198478.8
(22) Anmeldetag: 08.12.2015
(51) Int. Cl.: B23F 21/16

(54) **WÄLZFRÄSER SOWIE VERFAHREN ZUM HERSTELLEN UND ZUM AUFBEREITEN EINES WÄLZFRÄSERS**
HOB AND METHOD FOR PRODUCTION AND PREPARING OF A HOB
FRAISE MERE DEVELOPPANTE ET PROCEDE DE FABRICATION ET DE PREPARATION D'UNE FRAISE MERE DEVELOPPANTE

(43) Veröffentlichungstag der Anmeldung: 14.06.2017
(73) Patentinhaber: LMT Fette Werkzeugtechnik GmbH & Co. KG, 21493 Schwarzenbek (DE)
(72) Erfinder: Immich, Philipp, 24576 Bad Bramstedt (DE); Kretzschmann, Uwe, 21493 Schwarzenbek (DE); Weger, Stephan, 22089 Hamburg (DE)
(74) Vertreter: Hauck Patentanwaltspartnerschaft mbB

(56) Entgegenhaltungen:
- EP-A1- 2 345 497
- JANNINCK W L: "HIGH TECHNOLOGY HOBS", GEAR TECHNOLOGY, RANDALL PUBLISHING CO. ELK GROVE, ILLINOIS, US, Bd. 10, Nr. 1, 1. Januar 1993 (1993-01-01) , Seiten 22-26, XP000330188, ISSN: 0743-6858
- MODEROW R: "THE RIGHT AND WRONG OF MODERN HOB SHARPENING", GEAR TECHNOLOGY, RANDALL PUBLISHING CO. ELK GROVE, ILLINOIS, US, Bd. 9, Nr. 1, 1. Januar 1992 (1992-01-01), Seiten 34-38, XP000316005, ISSN: 0743-6858

## Beschreibung

Die Erfindung betrifft einen Wälzfräser mit einem Grundkörper, an dessen Umfang eine Mehrzahl von Schneidzähnen ausgebildet ist, wobei an mindestens einer Außenfläche der Schneidzähne erste Spanleitelemente ausgebildet sind. Die Erfindung betrifft außerdem ein Verfahren zum Herstellen eines solchen Wälzfräsers und ein Verfahren zum Aufbereiten eines solchen Wälzfräsers.

Wälzfräser besitzen einen Grundkörper, an dessen Umfang eine Vielzahl von Schneidzähnen ausgebildet ist. Die Schneidzähne dienen zum zerspanenden Bearbeiten eines Werkstücks. An den Schneidzähnen können auswechselbare Schneidplatten angeordnet sein. Ein Wälzfräser ist beispielsweise bekannt aus DE 44 45 911 C1. Ein scheibenförmiges Fräswerkzeug ist bekannt aus EP 1 897 642 A2.

Die Schneidzähne von Wälzfräsern werden oftmals mit Spanleitelementen versehen. Die Spanleitelemente können beispielsweise als in die Außenfläche der Schneidzähne eingearbeitete Spanleitnuten oder Spanleitstufen ausgestaltet sein. Spanleitelemente dienen zum schnellen Abführen der im Zuge der Bearbeitung erzeugten Späne. Auch können Spanleitelemente in Form sogenannter Spanbrecher vorliegen Siehe, zum Beispiel, EP 2 345 497 A1, welche die Basis für den Oberbegriff des Anspruchs 1 bildet. Es ist üblich, Außenflächen der Schneidzähne bei Verschleiß nachzuschleifen und den Wälzfräser damit für eine weitere Nutzung aufzubereiten. Im Zuge des Nachschleifens wird ein Teil der Oberfläche der Schneidzähne abgetragen. Dabei werden regelmäßig auch in der Außenfläche vorgesehene Spanleitelemente abgetragen. Entsprechend müssen nach dem Abschleifen wieder Spanleitelemente in die Oberfläche der Schneidzähne eingearbeitet werden. Dies ist aufwendig und führt zu einer Verlängerung des mit der Aufbereitung verbundenen Zeitaufwands.

Ausgehend von dem erläuterten Stand der Technik liegt der Erfindung die Aufgabe zugrunde, einen Wälzfräser, ein Verfahren zum Herstellen eines Wälzfräsers und ein Verfahren zum Aufbereiten eines Wälzfräsers bereitzustellen, mit denen eine schnelle und einfache Aufbereitung der Schneidzähne möglich ist.

Die Erfindung löst die Aufgabe durch die unabhängigen Ansprüche 1, 9 und 10. Vorteilhafte Ausgestaltungen finden sich in den abhängigen Ansprüchen, der Beschreibung und den Figuren.

Für einen Wälzfräser der eingangs genannten Art löst die Erfindung die Aufgabe dadurch, dass innerhalb der Schneidzähne und unterhalb der mindestens einen Außenfläche zweite Spanleitelemente ausgebildet sind, die durch Abtragen der mindestens einen Außenfläche insbesondere im Zuge eines Nachschleifens der Schneidzähne freigelegt werden können.

Der erfindungsgemäße Wälzfräser besitzt in an sich bekannter Weise einen Grundkörper, an dessen Umfang eine Vielzahl von Schneidzähnen ausgebildet ist. Der grundsätzliche Aufbau des erfindungsgemäßen Wälzfräsers kann sein wie in DE 44 45 911 C1 oder EP 1 897 642 A2 beschrieben.

In die Oberfläche der Schneidzähne sind außerdem Spanleitelemente, beispielsweise Spanleitstufen bzw. Spanleitstufen-Abschnitte oder Spanleitnuten, eingearbeitet, die beispielsweise zum Abführen von im Betrieb entstehenden Spänen von der Spanfläche dienen. Ein schnelles Abführen der erzeugten Späne ist für eine effiziente Werkstückbearbeitung von entscheidender Bedeutung. Spanleitelemente im Sinne der vorliegenden Patentanmeldung umfassen sämtliche Elemente, die Einfluss auf den Spanfluss haben. Neben dem schnellen Abtransport der erzeugten Späne, insbesondere von der Spanfläche, können die Spanleitelemente auch dazu dienen, das Ausbilden von Spänen einer zu großen Länge zu verhindern. Es kann sich bei den Spanleitelementen im Sinne dieser Anmeldung also auch um spanbrechende Elemente handeln.

Erfindungsgemäß sind zweite Spanleitelemente in einem zum Abtragen im Zuge eines Nachschleifens der Schneidzähne vorgesehenen Bereich der Schneidzähne, insbesondere in dem Bereich der Profilkonstanz, in das Material der Schneidzähne eingebracht. Die im Zuge der Aufbereitung abzutragenden Außenflächen können beispielsweise radial zu der Längsachse des Wälzfräsers ausgerichtet sein. Es kann sich bei den im Zuge der Aufbereitung abzutragenden Außenflächen um Spanflächen der Schneidzähne handeln. Bei den erfindungsgemäß innerhalb der Schneidzähne eingebrachten Spanleitelementen handelt es sich also um Hohlräume, die bereits im Zuge der Herstellung des Wälzfräsers eingebracht werden. Bei einem Nachschleifen des Wälzfräsers werden diese Spanleitelemente freigelegt. Durch das Abtragen der Außenflächen einschließlich der ersten Spanleitelemente wird eine neue Außenfläche an den Schneidzähnen gebildet, an der die dann freigelegten zweiten Spanleitelemente im Betrieb wirken können. Die zweiten Spanleitelemente erfüllen nach der Aufbereitung des Wälzfräsers durch Abtragen der Außenflächen also die jeweils gewünschte Spanleitfunktion.

Vorteilhaft bei der Erfindung ist, dass nach einem Abschleifen der Außenflächen bei Verschleiß nicht in aufwendiger Weise wieder Spanleitelemente in die Oberfläche der Außenflächen eingebracht, beispielsweise eingeschliffen werden müssen. Vielmehr sind diese Spanleitelemente bereits von vornherein innerhalb der Schneidzähne angelegt, so dass der Anwender unmittelbar nach dem Abschleifen der Außenflächen mit dem Wälzfräser weiterarbeiten kann. Erfindungsgemäß hat sich dabei überraschend herausgestellt, dass durch die innerhalb der Schneidzähne angeordneten, die später freizulegenden Spanleitelemente bildenden Hohlräume, keine relevante Schwächung der Schneidzähne verursacht wird.

Nach einer Ausgestaltung kann vorgesehen sein, dass innerhalb der Schneidzähne und unterhalb der mindestens einen Außenfläche mindestens zwei Gruppen von zweiten Spanleitelementen vorgesehen sind, wobei die mindestens zwei Gruppen von zweiten Spanleitelementen in unterschiedlichen Tiefen unterhalb der mindestens einen Außenfläche angeordnet sind, so dass durch Abtragen der mindestens einen Außenfläche bis zu einer ersten Tiefe zunächst eine erste der mindestens zwei Gruppen von zweiten Spanleitelementen freigelegt wird, und dass durch nachfolgendes weiteres Abtragen bis zu einer zweiten Tiefe eine zweite der mindestens zwei Gruppen von zweiten Spanleitelementen freigelegt wird.

Diese Ausgestaltung ist besonders vorteilhaft, wenn ein mehrfaches Abschleifen der Außenflächen der Schneidzähne, jeweils nach Verschleiß, vorgesehen ist. Es werden dann sukzessive Spanleitelemente der unterschiedlichen Gruppen für den Einsatz im Betrieb freigelegt. Natürlich können auch mehr als zwei Gruppen von zweiten Spanleitelementen vorgesehen sein, die dann in mehr als zwei unterschiedlichen Tiefen unterhalb der abzuschleifenden Außenflächen vorgesehen sind und dann sukzessive in mehr als zwei Schleifvorgängen nacheinander freigelegt werden können.

Wie bereits erwähnt, können die ersten und zweiten Spanleitelemente insbesondere Spanleitstufen und/oder Spanbrecher sein.

In besonders praxisgemäßer Weise kann der erfindungsgemäße Wälzfräser in einem additiven Verfahren bzw. einem 3D-Druckverfahren hergestellt worden sein. Durch additive Verfahren lassen sich die innenliegenden Spanleitelemente besonders flexibel und einfach herstellen, wie nachfolgend noch näher erläutert werden wird.

Nach einer weiteren Ausgestaltung können an einer Profilaußenfläche der Schneidzähne Spanbrecher ausgebildet sein. Diese können bereits im Zuge der additiven bzw. generativen Herstellung des Wälzfräsers eingebracht werden, müssen also nicht aufwendig nachträglich eingeschliffen werden. Sie können insbesondere bereits nach der Erstherstellung des Wälzfräsers freiliegen, werden dann also nicht erst im Zuge eines Abtragens der Außenfläche freigelegt. Nach dem additiven Verfahren kann noch eine Fertigbearbeitung des Wälzfräsers, insbesondere durch Schleifen, erfolgen. Auch kann insbesondere nach einem additiven Verfahren, und gegebenenfalls nach einer Fertigbearbeitung beispielsweise durch Schleifen, noch eine Beschichtung des Wälzfräsers mit einer Hartstoffschicht erfolgen, vorzugsweise in einem CVD-Verfahren oder einem PVD-Verfahren.

Der Wälzfräser kann aus einem Schnellarbeitsstahlwerkstoff, insbesondere einer intermetallischen Legierung vorzugsweise aus den System Fe, Co und Mo, bestehen. Alternativ kann der Wälzfräser aus einem Hartmetallwerkstoff oder einem Keramikwerkstoff bestehen. Dabei handelt es sich um besonders verschleißfeste Materialien.

Die Erfindung löst die Aufgabe außerdem durch ein Verfahren zum Herstellen eines erfindungsgemäßen Wälzfräsers, bei dem in einem additiven Verfahren bzw. einem 3D-Druckverfahren in einer Form Material schichtweise ausgebracht und durch selektives Aufschmelzen oder Sintern des ausgebrachten Materials zumindest der Grundkörper mit den Schneidzähnen und den ersten und zweiten Spanleitelementen aufgebaut wird.

Das insbesondere pulverförmige Material wird für den 3D-Druck schichtweise in eine Form ausgebracht. Bei dem Material kann es sich beispielsweise um einen Metallwerkstoff oder einen Keramikwerkstoff handeln. Das selektive Aufschmelzen oder Sintern des Materials zum Bilden der gewünschten dreidimensionalen Form kann ein selektives Laserschmelzen oder selektives Lasersintern sein. Es erfolgt somit ein schichtweiser Aufbau des Wälzfräsers, insbesondere seines Grundkörpers und der Schneidzähne, bei dem die die freizulegenden Spanleitelemente bildenden Hohlräume direkt ausgebildet werden können. Wie bereits erwähnt, kann nach dem additiven Verfahren noch eine Fertigbearbeitung des Wälzfräsers, insbesondere durch Schleifen, erfolgen. Wie ebenfalls bereits erwähnt, kann nach dem additiven Verfahren, und gegebenenfalls nach einer Fertigbearbeitung beispielsweise durch Schleifen, auch noch eine Beschichtung des Wälzfräsers mit einer Hartstoffschicht erfolgen, vorzugsweise in einem CVD-Verfahren oder einem PVD-Verfahren.

Außerdem betrifft die Erfindung ein Verfahren zum Aufbereiten eines erfindungsgemäßen Wälzfräsers, bei dem die mindestens eine Außenfläche der Schneidzähne insbesondere im Zuge eines Nachschleifens der Schneidzähne abgetragen wird, so dass die zweiten Spanleitelemente freigelegt werden.

Sind mehrere in unterschiedlichen Tiefen unterhalb der Außenfläche ausgebildete Gruppen von Spanleitelementen vorgesehen, kann das Abtragen bzw. Abschleifen entsprechend je nach Verschleiß im Zuge der Aufbereitung mehrfach erfolgen.

Ein Ausführungsbeispiel der Erfindung wird nachfolgend anhand von Figuren näher erläutert. Es zeigen schematisch:
- Fig. 1: einen erfindungsgemäßen Wälzfräser in einer perspektivischen Ansicht,
- Fig. 2: eine Seitenansicht eines Schneidzahns des in Fig. 1 gezeigten Wälzfräsers,
- Fig. 3: eine isometrische Ansicht des in Fig. 2 gezeigten Schneidzahns,
- Fig. 4: eine isometrische Ansicht eines Schneidzahns eines erfindungsgemäßen Wälzfräsers nach einem weiteren Ausführungsbeispiel, und
- Fig. 5: eine isometrische Ansicht eines Schneidzahns eines erfindungsgemäßen Wälzfräsers nach einem weiteren Ausführungsbeispiel.

Soweit nichts anderes angegeben ist, bezeichnen in den Figuren gleiche Bezugszeichen gleiche Gegenstände.

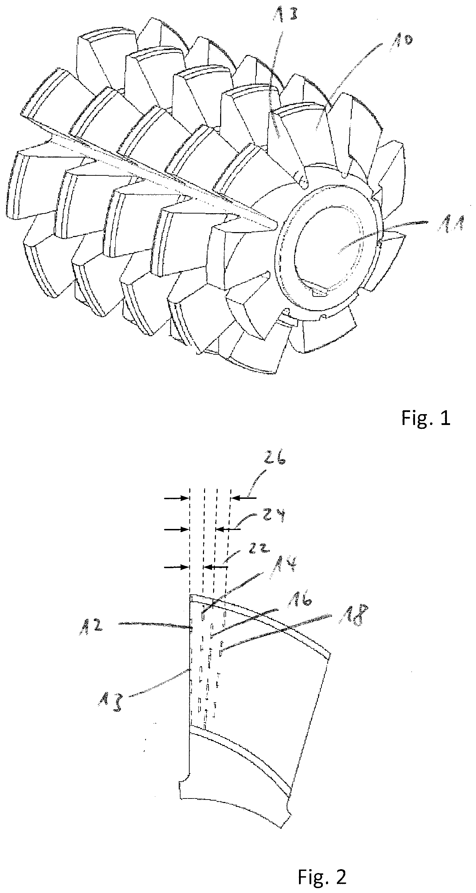

Der in Fig. 1 gezeigte erfindungsgemäße Wälzfräser besitzt einen im gezeigten Beispiel zylindrischen Grundkörper an dessen Umfang eine Mehrzahl von Schneidzähnen 10 ausgebildet ist. Die in den Figuren 2 bis 5 gezeigten Schneidzähne 10 können alternativ oder kombiniert an diesem Wälzfräser ausgebildet sein. Üblicherweise sind sämtliche an dem Wälzfräser ausgebildeten Schneidzähne 10 identisch ausgebildet. Zwingend ist dies jedoch nicht. Der Grundkörper besitzt in an sich bekannter Weise eine axiale Aufnahme 11 zur Einspannung in einer Bearbeitungsmaschine.

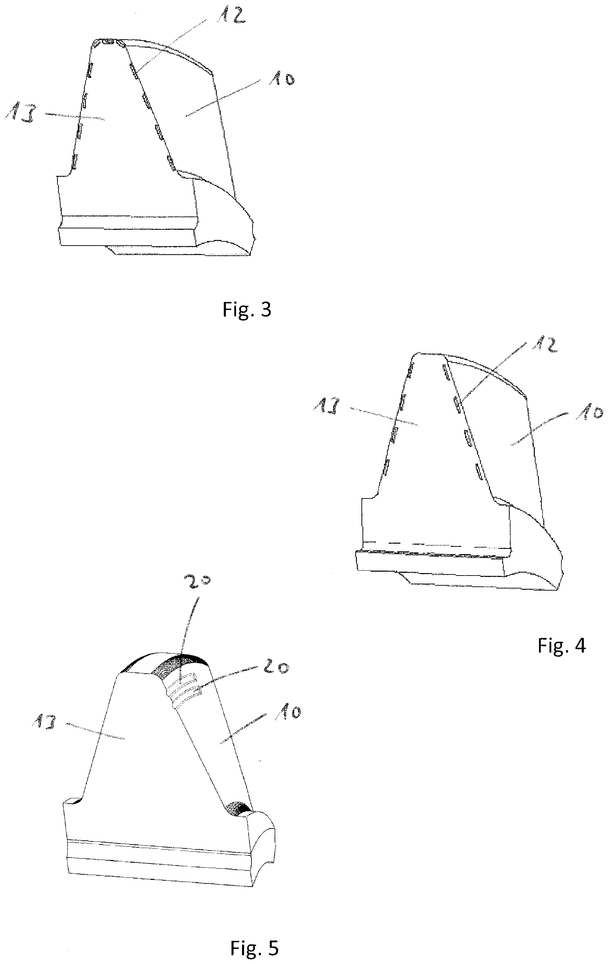

In Fig. 2 sind bei dem Bezugszeichen 12 gestrichelt als unsichtbare Körperkanten erste Spanleitelemente an der Oberfläche des Schneidzahns 10 dargestellt. Diese ersten Spanleitelemente 12 sind auch in der Ansicht der Fig. 3 zu erkennen. In der isometrischen Ansicht der Fig. 3 ist als Frontseite die Spanfläche 13 des Schneidzahns 10 zu sehen. In dieser Spanfläche 13 sind die ersten Formleitelemente 12 ausgebildet. Diese Spanfläche 13 wird bei Verschleiß des Wälzfräsers abgetragen, insbesondere durch ein Nachschleifen.

Bei den Bezugszeichen 14, 16, 18 sind in Fig. 2 ebenfalls gestrichelt als unsichtbare Körperkanten in unterschiedlichen Tiefen unterhalb der Außenfläche der Schneidzähne 10 ausgebildete Hohlräume dargestellt. Diese bilden nach Abtragen der Außenfläche der Schneidzähne 10, beispielsweise durch Nachschleifen, zweite Spanleitelemente 14, 16, 18, indem sie durch das Abtragen freigelegt werden. Wie in Fig. 2 zu erkennen, sind dabei mehrere Gruppen von zweiten Spanleitelementen 14, 16, 18 vorgesehen, die in unterschiedlichen Tiefen unterhalb der Außenfläche der Schneidzähne 10 liegen. Diese werden in mehreren Schleifvorgängen je nach Verschleiß sukzessive freigelegt und bilden entsprechend sukzessive zweite Spanleitelemente 14, 16, 18. Die Abstände der unterschiedlichen Gruppen von Spanleitelementen 14, 16, 18 zu der Spanfläche 13 sind in Fig. 2 durch Pfeile 22, 24 und 26 veranschaulicht. Diese Abstände sind ausreichend groß, so dass durch einen Verschleiß im ordnungsgemäßen Betrieb die jeweils nächste Gruppe von Spanleitelementen 14, 16, 18 nicht erreicht wird. Vielmehr wird der Wälzfräser vor Erreichen der nächsten Gruppe von Spanleitelementen 14, 16, 18 insbesondere durch Nachschleifen der Spanflächen 13 unter dann erfolgender Freilegung der nächsten Gruppe von Spanleitelementen 14, 16, 18 aufbereitet.

In dem Ausführungsbeispiel der Fig. 3 sind die Spanleitelemente 12, 14, 16, 18 im Bereich der Zahnflanken und im Bereich des Zahnkopfes der Schneidzähne 10 ausgebildet. Das Ausführungsbeispiel der Fig. 4 unterscheidet sich von dem Ausführungsbeispiel der Fig. 3 lediglich darin, dass bei dem Ausführungsbeispiel der Fig. 4 im Bereich des Zahnkopfes keine Formleitelemente ausgebildet sind.

Bei den ersten und zweiten Spanleitelementen 12, 14, 16, 18 kann es sich insbesondere um Spanleitstufen bzw. Spanleitnuten handeln. Fig. 5 zeigt ein Ausführungsbeispiel, bei dem an den Außenflächen der Schneidzähne 10 Spanbrecher 20 eingebracht sind.

Der in den Figuren gezeigte erfindungsgemäße Wälzfräser wurde in einem 3D-Druckverfahren unter Einbringung der jeweiligen Formleitelemente hergestellt, wie grundsätzlich oben erläutert.

## Patentansprüche

1. Wälzfräser mit einem Grundkörper, an dessen Umfang eine Mehrzahl von Schneidzähnen (10) ausgebildet ist, wobei an mindestens einer Außenfläche der Schneidzähne (10) erste Spanleitelemente (12,) ausgebildet sind, **dadurch gekennzeichnet, dass** innerhalb der Schneidzähne (10) und unterhalb der mindestens einen Außenfläche Hohlräume als zweite Spanleitelemente (14, 16, 18) ausgebildet sind, die durch Abtragen der mindestens einen Außenfläche des Wälzfräsers freigelegt werden können.

2. Wälzfräser nach Anspruch 1, **dadurch gekennzeichnet, dass** innerhalb der Schneidzähne (10) und unterhalb der mindestens einen Außenfläche mindestens zwei Gruppen von zweiten Spanleitelementen (14, 16, 18) vorgesehen sind, wobei die mindestens zwei Gruppen von zweiten Spanleitelementen (14, 16, 18) in unterschiedlichen Tiefen unterhalb der mindestens einen Außenfläche angeordnet sind, so dass durch Abtragen der mindestens einen Außenfläche bis zu einer ersten Tiefe zunächst eine erste der mindestens zwei Gruppen von zweiten Spanleitelementen (14, 16, 18) freigelegt wird, und dass durch nachfolgendes weiteres Abtragen bis zu einer zweiten Tiefe eine zweite der mindestens zwei Gruppen von zweiten Spanleitelementen (14, 16, 18) freigelegt wird.

3. Wälzfräser nach einem der vorhergehenden Ansprüche, **dadurch gekennzeichnet, dass** die ersten und zweiten Spanleitelemente (12, 14, 16, 18) Spanleitstufen und/oder Spanleitnuten sind.

4. Wälzfräser nach einem der vorhergehenden Ansprüche, **dadurch gekennzeichnet, dass** er in einem additiven Verfahren hergestellt worden ist.

5. Wälzfräser nach einem der vorhergehenden Ansprüche, **dadurch gekennzeichnet, dass** an einer Profilaußenfläche der Schneidzähne Spanbrecher ausgebildet sind.

6. Wälzfräser nach einem der Ansprüche 1 bis 5, **dadurch gekennzeichnet, dass** er aus einem Schnellarbeitsstahlwerkstoff, insbesondere einer intermetallischen Legierung, besteht.

7. Wälzfräser nach einem der Ansprüche 1 bis 5, **dadurch gekennzeichnet, dass** er aus einem Hartmetallwerkstoff besteht.

8. Wälzfräser nach einem der Ansprüche 1 bis 5, **dadurch gekennzeichnet, dass** er aus einem Keramikwerkstoff besteht.

9. Verfahren zum Herstellen eines Wälzfräsers nach einem der vorhergehenden Ansprüche, bei dem in einem additiven Verfahren in einer Form Material schichtweise ausgebracht und durch selektives Aufschmelzen oder Sintern des ausgebrachten Materials zumindest der Grundkörper mit den Schneidzähnen (10) und den ersten und zweiten Spanleitelementen (12, 14, 16, 18) aufgebaut wird.

10. Verfahren zum Aufbereiten eines Wälzfräsers nach einem der Ansprüche 1 bis 8, **dadurch gekennzeichnet, dass** die mindestens eine Außenfläche der Schneidzähne (10) abgetragen wird, so dass die zweiten Spanleitelemente (14, 16, 18) freigelegt werden.

11. Verfahren nach Anspruch 10, **dadurch gekennzeichnet, dass** das Abtragen der mindestens einen Außenfläche durch Schleifen erfolgt.

## Claims

1. A hob cutter with a base body, on the perimeter of which are formed a plurality of cutting teeth (10), wherein first chip guiding elements (12) are formed on at least one outer surface of the cutting teeth (10), **characterised in that** hollow spaces are formed as second chip guiding elements (14, 16, 18) within the cutting teeth (10) and below the at least one outer surface, which can be laid open by ablation of the at least one outer surface of the hob cutter.

2. The hob cutter according to claim 1, **characterised in that** at least two groups of second chip guiding elements (14, 16, 18) are provided within the cutting teeth (10) and below the at least one outer surface, wherein the at least two groups of second chip guiding elements (14, 16, 18) are arranged in different depths below the at least one outer surface, so that by ablation of the at least one outer surface down to a first depth, a first one of the at least two groups of second chip guiding elements (14, 16, 18) is laid open at first, and that a second one of the at least two groups of second chip guiding elements (14, 16, 18) is laid open by successive further ablation down to a second depth.

3. A hob cutter according to one of the preceding claims, **characterised in that** the first and second chip guiding elements (14, 16, 18) are chip plates and/or chip grooves.

4. A hob cutter according to one of the preceding claims, **characterised in that** it has been produced by an additive process.

5. A hob cutter according to one of the preceding claims, **characterised in that** chip breakers are formed on a profile outer surface of the cutting teeth.

6. A hob cutter according to one of the claims 1 to 5, **characterised in that** it consists of a high speed steel material, in particular of an intermetallic alloy.

7. A hob cutter according to one of the claims 1 to 5, **characterised in that** it consists of a high-quality carbide material.

8. A hob cutter according to one of the claims 1 to 5, **characterised in that** it consists of a ceramic material.

9. A method for producing a hob cutter according to one of the preceding claims, wherein material is dispensed layer by layer in a mould in an additive process, and at least the base body with the cutting teeth (10) and the first and second chip guiding elements (14, 16, 18) is built by selective melting or sintering of the dispensed material.

10. A method for preparing a hob cutter according to one of the claims 1 to 8, **characterised in that** the at least one outer surface of the cutting teeth (10) is ablated, so that the second chip guiding elements (14, 16, 18) are laid open.

11. The method according to claim 10, **characterised in that** the ablation of the at least one outer surface takes place by grinding.

## Revendications

1. Fraise-mère avec un corps de base, sur le périmètre duquel sont formées plusieurs dents coupantes (10), dans laquelle premiers éléments guidant le copeau (12) sont formés sur au moins une surface extérieure des dents coupantes (10), **caractérisé en ce que** des cavités sont formées comme deuxièmes éléments guidant le copeau (14, 16, 18) en l'espace des dents coupantes (10) et au dessous de l'au moins une surface extérieure, qui peuvent être exposées par ablation de l'au moins une surface extérieure de la fraise-mère.

2. Fraise-mère selon la revendication 1, **caractérisé en ce que** au moins deux groupes de deuxièmes éléments guidant le copeau (14, 16, 18) sont prévus en l'espace des dents coupantes (10) et au dessous de l'au moins une surface extérieure, les au moins deux groupes de deuxièmes éléments guidant le copeau (14, 16, 18) étant arrangés dans des profondeurs différentes au dessous de l'au moins une surface extérieure, de sorte que par ablation de l'au moins une surface extérieure jusqu'à une première profondeur, un premier des au moins deux groupes de deuxièmes éléments guidant le copeau (14, 16, 18) est d'abord exposé, et qu'un deuxième de l'au moins deux groupes de deuxièmes éléments guidant le copeau (14, 16, 18) est ensuite exposé par ablation nouvelle jusqu'à une deuxième profondeur.

3. Fraise-mère selon une des revendications précédentes, **caractérisé en ce que** les premiers et deuxièmes éléments guidant le copeau (14, 16, 18) sont des brise-copeaux et/ou des rainures guidant le copeau.

4. Fraise-mère selon une des revendications précédentes, **caractérisé en ce que** elle a été produite dans un procès additif.

5. Fraise-mère selon une des revendications précédentes, **caractérisé en ce que** des brise-copeaux sont formés sur une surface extérieure profilée des dents coupantes.

6. Fraise-mère selon une quelconque des revendications 1 à 5, **caractérisé en ce que** elle consiste d'un acier à coupe rapide, notamment d'un alliage intermétallique.

7. Fraise-mère selon une quelconque des revendications 1 à 5, **caractérisé en ce que** elle consiste d'un métal dur de haute qualité.

8. Fraise-mère selon une quelconque des revendications 1 à 5, **caractérisé en ce que** elle consiste d'un matériau céramique.

9. Procédé de production d'une fraise-mère selon une des revendications précédentes, dans lequel du matériau est épandu en couches successives dans une moule par un procédé additif, et au moins le corps de base avec les dents coupantes (10) et les premiers et deuxièmes éléments guidant le copeau (14, 16, 18) est construit par fusion ou frittage sélectif du matériau épandu.

10. Procédé de traitement d'une fraise-mère selon une quelconque des revendications 1 à 8, **caractérisé en ce que** l'au moins une surface extérieure des dents coupantes (10) est éliminée, de sorte que les deuxièmes éléments guidant le copeau (14, 16, 18) sont exposés.

11. Procédé selon la revendication 10, **caractérisé en ce que** l'élimination de l'au moins une surface extérieure prend place par affûtage.
